# EUROPEAN PATENT SPECIFICATION

(11) **EP 3 403 812 B1**
(45) Date of publication and mention of the grant of the patent: **20.11.2019**
(21) Application number: 17171722.6
(22) Date of filing: 18.05.2017
(51) Int. Cl.: B29C 73/10, B64F 5/40, F03D 80/50

(54) **REPAIR STRIP AND PROCESS FOR WIND TURBINE LEADING EDGE PROTECTION TAPE**
REPARATURBAND UND VERFAHREN FÜR EIN WINDTURBINENEINTRITTSKANTENSCHUTZBAND
BANDE DE RÉPARATION ET PROCÉDÉ DE BANDE DE PROTECTION DE BORD D'ATTAQUE D'ÉOLIENNE

(43) Date of publication of application: 21.11.2018
(73) Proprietor: 3M Innovative Properties Company, Saint Paul, MN 55133-3427 (US)
(72) Inventor: Schoeppel, Wolfgang, 41470 Neuss (DE)
(74) Representative: Müller, Bruno

(56) References cited:
- US-A1- 2005 112 968
- US-A1- 2011 158 807
- US-A1- 2013 012 086

## Description

### Field

The present disclosure relates to a method for repairing the surface of rotor blades, in particular of wind turbines, or aircraft wings. In particular, the present disclosure relates to a method for repairing rotor blades comprising a protection layer, in particular on their leading edges. In addition, the present disclosure further relates to a rotor blade or aircraft wing comprising a protection layer obtained by the method as described herein.

### Background

It has long been known that objects made of polymeric or composite materials travelling at high speeds may suffer from erosion due to the contact with dust, sand or even rain. In fact, this is well-observed with regard to the leading edges of rotor blades of helicopters, wings of aircrafts, and, since their introduction, rotor blades of wind turbines. Erosion, in particular rain erosion, can not only be detrimental to the structural integrity or optical appearance of the objects concerned, but also have negative impact on the aerodynamic profile of rotor blades and wings. While it is obvious that this means an undesired deterioration of aerodynamic efficiency of wings and helicopter rotor blades, it must be stressed that this is also of great concern when running a wind turbine. This circumstance is even aggravated due to the ever increasing size of wind turbines and the corresponding rotor blades, since an increase in size has the consequence of an increase in speed at which a particular point on the leading edge of the rotor blade travels. In particular, at the leading edges closer the tip of the blade speeds are achieved at which rain erosion represents a problem.

Thus, counter measures were developed, *inter alia*, the application of protection tapes over the leading edges of rotor blades of wind turbines and helicopters. These protection tapes are well-known in the art. Often, polyurethane tapes are used, which are also in most cases equipped with a pressure-sensitive adhesive (PSA) layer for affixing the tape to the rotor blade. However, these tapes are also prone to erosions such as rain erosion and therefore need to be replaced from time to time. Clearly, when undergoing repair, the operation of helicopters and particularly wind turbines must be suspended, which directly means a loss of output of electric energy and a corresponding economic loss. Thus, repair times should be as short as possible, giving rise to a demand for cost- and time-efficient repair measures and equipment which is easy to apply. Moreover, erosion or damage may not only appear on the complete leading edge of rotor blades or wings, but may also be present at small or limited localizations on the edge. Hence, it may be desirable not to remove all of the protection tape, but only repair the damaged or eroded parts. Finally, it may also be desirable that the repaired area exhibits the same erosion protection as the original protection layer. Also, repair of small areas may be necessary because of transportation damages.

In summary, without wanting to deny the advantages and progresses in the art in this regard, there still exists a need for new methods for repairing erosion protection layers, in particular on leading edges of rotors of wind turbines and helicopters as well as aircraft wings.

Document US 2011/158807 A1 discloses a method for repairing the surface of rotor blades or aircraft wings.

### Summary

In one aspect of the present disclosure, there is provided a method for repairing the surface of rotor blades or aircraft wings, comprising
(a) a composite substrate; and
(b) a protection layer having at least one area of at least partial damage,
the method comprising
(i) removing at least part of the damaged part of the protection layer;
(ii) optionally, reconstructing the surface of damaged composite substrate;
(iii) optionally, applying primer solution to the surface of the composite substrate;
(iv) optionally, applying a polymer solution, preferably in at least one organic solvent;
(v) applying a repair patch of a tape comprising at least one thermoplastic elastomer onto at least of a part of the composite surface;
(vi) applying heat so that the polymer tape melts and covers the damaged area, thereby forming a protection layer or applying a repair solution, preferably in at least on organic solvent, so that the repair patch at least partially resolves and covers the damaged area.

In another aspect of the present disclosure, there is provided a rotor blade or aircraft wing comprising a protection layer, obtained by the method as described herein.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e. g., 1 to 10 includes 1.4, 1.9, 2.33, 5.75, 9.98, etc.). Also herein, recitation of "at least one" includes all numbers of one and greater (e. g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100 % mole unless specified otherwise.

Unless explicitly stated otherwise, all embodiments of the present disclosure can be combined freely.

The first aspect of the present disclosure is a method for repairing the surface of rotor blades or aircraft wings, comprising
(a) a composite substrate; and
(b) a (leading edge) protection layer having at least one area of at least partial damage,
the method comprising:
(i) removing at least part of the damaged part of the protection layer;
(ii) optionally, reconstructing the surface of damaged composite substrate;
(iii) optionally, applying primer solution to the surface of the composite substrate;
(iv) optionally, applying a polymer solution, preferably in at least one organic solvent;
(v) applying a repair patch of a tape comprising at least one thermoplastic elastomer onto at least of a part of the composite surface;
(vi) applying heat so that the polymer tape melts and covers the damaged area, thereby forming a protection layer or applying a repair solution, preferably in at least one organic solvent, so that the repair patch at least partially resolves and covers the damaged area.

Accordingly, the method gives rise to a combination of effects desirable for the repair and maintenance of rotor blades or aircraft wings, such as rotor blades of wind turbines. In particular, the method as described herein enables the skilled person to quickly repair localized parts of damaged protective layers on substrates. In addition, the repaired part of the protective layer may exhibit the same erosion protective properties as the original undamaged part. Thus, the presently described method is suited for efficiently repairing damaged parts of erosion protection layers of aircraft wings or rotors of helicopters and wind turbines, respectively.

Generally, the present method relates to repairing the surface of aircraft wings and rotor blades of helicopters and wind turbines, respectively. Preferably, the method according to the present disclosure is applied for repairing the surface of rotor blades of wind turbines, in particular the leading edges of wind turbines.

The rotor blades and the aircraft wing as used herein generally comprise a composite substrate, one or several coatings, and a protection layer disposed thereon. In most cases, the protection layer will be located on the leading edge of these substrates, since erosion and rain erosion takes part mostly on these areas. The composite substrates itself consist of composite materials commonly known and used in the art for rotor blades of helicopters and wind turbines as well as aircraft wings. For example, a composite material may be obtained by curing an epoxy or phenoxy resin enforced by fibers or a woven or non-woven fabric, or may contain polyurethane enforced with non-woven or woven fabrics. Fibers and fabrics obtained therefrom may be selected from polymeric fibers, glass fibers, metal fibers, and carbon fibers, dependent on the selected property and price of the desired application. In general, on top of the composite substrate, at least one coating is applied. These coatings may be referred to as top coat or hard coat and may comprise at least one filler material to obtain an even surface and at least one top coat obtained from polyurethanes (often applied as two-component system) and epoxy coating compositions known in the art for these purposes.

The protection layer disposed on the composite substrate may be obtained from an erosion protection tape known in the art. Such a tape may comprise a polymeric layer and a pressure sensitive adhesive (PSA) layer used for affixing the tape onto the substrate. The polymeric layer of the tape forming the protection layer may comprise, for example, polyurethane or a thermoplastic polyurethane (TPU). Erosion protection tapes are, for example, commercially available from 3M Germany GmbH under the trade designation Wind Protection Tape W8607 or W8750.

The protection layer of the substrate may exhibit at least one area of at least partial damage. Damage is either or both physical and chemical damage, however, in the present context physical damage is predominant. Physical damage is in most cases erosion caused by rain, dust, sand, or other particles. In any event, the nature and appearance of such damage is well-known to the skilled person. Moreover, also the coatings and substrate beneath the protection layer may be affected by physical damage such as rain erosion and the like. Damage comprises all kind of damages, in particular small, localized damage such as cracks or punctual damage, as well as damage in larger areas of several square centimetres. Also, damage comprises damage only to a certain thickness of the protective layer or to the complete thickness of the protective layer and the surface under the protective layer, i. e. the hard coat of the composite substrate itself.

In the first step of the method according to the present disclosure, at least part of the damaged part of the protection layer, i. e. protection tape affixed to the substrate surface, is removed. Preferably, the complete damaged part of the protection layer is removed. Also, damaged top coatings, fillers or other underlying layers need to be removed. It is also preferred that more of the damaged area of the protective layer is removed. That is, some of the non-damaged protection layer/protection tape adjacent to the damages area may be removed. As appreciated by the skilled person, areas are cut with a knife or other cutlery and then the damaged parts are removed in stripes or patches. Finally, removal of protection layers or part or protection layers, or parts of or complete protection tapes is well-known in the art.

In the above-mentioned case that the substrate, i. e. the surface of the composite substrate, is also affected by damage, it is preferred that this surface is reconstructed. This may be achieved by means commonly known in the art, e. g. by the application of structural repair patches and fillers. In addition, a top coating could then be applied as known in the art. Similarly, if only the top coating under said protection layer is damaged, it is understood that this top coating could then be coated onto the substrate. Reconstructing the damaged part of the surface of the composite substrate may further comprise grinding and/or polishing the surface of the part.

It may further be preferable to apply an adhesion promoter (which may also referred to as primer) onto the composite substrate surface and/or the reconstructed composite surface or any other coating or layer which represents the top layer of the construction obtained in the previous optional repair step. This may have the effect of an improved adhesion of the repair patch of the polymer tape to the composite substrate, which may also give rise to an improved erosion resistance of the repaired area covered by the repair patch. In general, the adhesion promoter or primer is coated to a thickness dependent on the constitution of the underlying substrate surface. That is, a more porous surface requires a thicker coating of primer or adhesion promoter. For example, the adhesion promoter may be coated to a thickness in the range of from 10 to 50 µm. Primer solutions and methods for their applications are well-known in the art. For example, polyamide solutions in isopropanol are available e. g., under the trade designation W9910 primer from 3M Germany GmbH. It is preferred that the solvent of the adhesion promoter solution is evaporated before the next step, i. e. the substrate coated with said adhesion promoter solution is dried. This may be achieved by either allowing the coating to dry under ambient conditions or by heating it, e. g. by using a heat gun or the like.

Instead or in addition to a primer it is possible to apply a solution of at least one polymer in at least one organic solvent onto the surface of the composite substrate. In this regard, it is understood that the above described area of the composite surface is meant of which the protective layer was removed in a previous step. Applying the polymer solution may have the effect that the adhesion of a repair patch to the composite substrate surface is improved, which may further enhance the effects described herein such as improved erosion protection of the repaired protection layer of the composite substrate. In this regard, it is preferred that the at least one organic solvent is selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof. Of these solvents, tetrahydrofurane, isopropanol and ethanol, dichloromethane and mixtures thereof are particularly preferred, with particular preference of tetrahydrofurane. Alternatively, aqueous dispersions of e. g. thermoplastic polyurethanes may be used. With regard to the at least one polymer in the polymer solution, it is preferred that it is the same polymer as in the polymer in the repair patch, i. e., it is preferred that the at least one polymer in the polymer solution is at least one thermoplastic elastomer, preferably the same as in the repair patch. This will have the effect of an improved bonding of the repair patch to the composite surface, with may further add to an improved erosion resistance. In general, the polymer solution is coated to a thickness dependent on the constitution of the underlying substrate surface. That is, a more porous surface requires a thicker coating of polymer solution. For example, the polymer of the polymer solution may be coated to a thickness in the range of from 10 to 50 µm. Again, it is preferred that the solvent of said polymer solution is evaporated before the next step. This may also be achieved by either allowing the substrate coated with the polymer solution to dry under ambient conditions or by applying heat such as by using a heat gun as known in the art.

Next, a repair patch of a polymer tape comprising at least one thermoplastic elastomer is applied onto at least part of the composite substrate surface. The use of at least one thermoplastic elastomer has the advantage that an effective erosion protection layer may be obtained. Furthermore, since the repair patch is molten or dissolved onto the substrate and forms an intimate adhesion with the substrate surface, there is no need for a PSA layer or using other adhesives for affixing the repair patch of a polymer tape to said surface. The repair patch of a polymer tape may have any given sizes and shapes which may be obtained by cutting or otherwise shaping a polymer tape. Generally, the shape and size is determined by the shape and size of the damaged area of the protection layer of the composite substrate. In most cases, the repair patch of a polymer tape will have the form of a strip. In this regard, the repair patch is applied that it may also cover the edges of the protection layer surrounding the damaged area. It is also preferred to squeeze out air that may be entrapped under the repair patch, preferably by means of a roller, preferably a silicone or rubber roller. Air or air bubbles entrapped under the repair patch may be detrimental to the adhesion of the repair patch to the substrate and/or to the erosion resistance of the finished protection layer. In general, it is preferred that the repair patch does not comprise an adhesive layer such as a PSA layer for affixing to the composite substrate surface. However, in the case that large areas of the protective layer of the composite substrate are affected by damage, it may also be preferred to use a large repair patch having a PSA layer, and cut it to a size and shape smaller than the affected damaged area. This patch may be then affixed to the damaged and preferably pre-treated composite substrate surface area such that a gap between the affixed repair patch having a PSA and the surrounding protection layer is formed. In this case, it is preferred that this gap is covered by a repair patch without having a PSA as described herein, preferably that also covers the edges of both repair patch having a PSA and surrounding edges, i. e. at least part of the adjacent protection layer.

If the repair patch of a polymer tape is dissolved a repair solution, preferably in at least one solvent, may be used. The repair solution may be applied onto the repair patch. The repair solution may be a solution of at least one polymer in at least one organic solvent. Applying the polymer solution onto the repair patch may have the effect that the adhesion of a repair patch to the composite substrate surface is improved, which may further enhance the effects described herein such as improved erosion protection of the repaired protection layer of the composite substrate. It may also have the effect, that the repair patch gets at least partially dissolved thereby adapting its shape to the at least one area of at least partial damage. It is preferred that the at least one organic solvent of the repair solution is selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof. Of these solvents, tetrahydrofurane, isopropanol and ethanol, dichloromethane and mixtures thereof are particularly preferred, with particular preference of tetrahydrofurane. Alternatively, aqueous dispersions of e. g. thermoplastic polyurethanes may be used. With regard to the at least one polymer in the polymer solution, it is preferred that it is the same polymer as in the polymer in the repair patch, i. e., it is preferred that the at least one polymer in the polymer solution is at least one thermoplastic elastomer, preferably the same as in the repair patch. This will have the effect of an improved bonding of the repair patch to the composite surface, with may further add to an improved erosion resistance. In general, the polymer solution is coated to a thickness dependent on the constitution of the underlying substrate surface and repair patch constitution. That is, a more porous surface requires a thicker coating of polymer solution. For example, the repair solution may be coated to a thickness in the range of from 10 to 50 µm.

According to one embodiment the at least one thermoplastic elastomer in the repair patch is selected from thermoplastic polyurethane, styrenic block copolymers, thermoplastic olefins, elastomeric alloys, thermoplastic copolyesters, thermoplastic polyamides and combinations thereof, and preferably is thermoplastic polyurethane. With regard to the thermoplastic elastomer, any thermoplastic elastomer may be used. The term "thermoplastic elastomers" as used herein has the meaning common in the art, i. e. compounds behaving at room temperature similar to classic elastomers, but are moldable into shape under addition of heat, i. e. which exhibit in addition to elastomeric properties thermoplastic behaviour. Of further particular importance to the present disclosure is the elastomeric behaviour under ambient conditions, i. e. the ability to stretch or deform under physical influence and return to its original or near original shape. This has the benefit of creating a longer life and better physical range than other materials, which means that these materials may act as protection layer for the composite substrate against physical influence such as raindrops, sand or dust particles impinging the substrate surface at high speeds. In summary, the repair patch comprising thermoplastic elastomers may have the advantages of being affixed under the addition of heat, thereby saving additional adhesive, and offer erosion protection for the composite substrate.

Preferably, the at least one thermoplastic elastomer in the repair patch is selected from thermoplastic polyurethane, styrenic block copolymers, thermoplastic olefins, elastomeric alloys, thermoplastic polyesters, thermoplastic polyamides and combinations thereof. Exemplary, commercially available thermoplastic elastomers are these under the trade designations Thermolast, Santoprene (block copolymers), Thermolast A, Forprene, Termoton-V (elastomeric alloys), Sofprene (SBS), Laprene (SBS), Thermolast K (SEBS) (styrenic block copolymers), For-Tec E (thermoplastic olefins), Desmopan, Elastollan, Avalon, Irogran (thermoplastic polyurethane). Since thermoplastic polyurethanes exhibit properties such as elasticity, transparency, and a certain resistance to oil, grease and abrasion, they are preferred as thermoplastic elastomers in the present disclosure.

According to another embodiment, the protection layer of the rotor blade or aircraft wing may comprise at least one thermoplastic elastomer.

According to another embodiment, the polymer in the polymer solution may be the same polymer as in the repair patch of the polymer tape. It is also possible that the polymer in the repair solution is the same polymer as in the repair patch of the polymer tape.

With regard to good adhesion and resistance to erosion, it is preferred that the polymer in the polymer solution, the repair solution, the protection layer and the polymer in the repair patch is the same. It is also preferred that the polymer in the polymer solution, the repair solution, the protection layer and the repair patch is a thermoplastic elastomer, with the same disclosure and preference as discussed with regard to the thermoplastic elastomer in the repair patch applying.

Next, heat is applied to the repair patch so that the polymer tape melts and covers the damaged area, thereby forming a protection layer. Applying heat is preferably carried out by the addition of hot air. This may be achieved, dependent on the size of the substrate, in a hot air oven or by means of a heat gun. In this regard, it is preferred that the air temperature used in this step has temperature in the range of from 120 to 500 °C, preferably in the range of from 200 to 450 °C, more preferably from 250 to 350 °C. Melting and covering the damaged area may be made sure by visual inspection of the area. However, in particular when using thermoplastic polyurethane in either or all of protection layer, polymer solution and repair patch, it is preferred to apply heat until the surface temperature of the repair patch reaches 140 to 200 °C. This temperature may be measured by means of a contactless thermometer, e. g. an IR thermometer used for measuring temperatures of surfaces from a distance.

After the repair patch has molten and the protection layer has been established, it may be allowed to cool down. Alternatively, in an additional step a roller, preferably a silicone or rubber roller, is rolled over the molten repair patch so as to flatten the edges and fuse the patch to the composite substrate and/or to the surrounding part of the protection layer. It is also preferred that rolling the roller over the repair patch is done parallel to applying heat to the repair patch. This may be advantageous in that a closer connection between the molten repair patch and the composite substrate and/or the surrounding part of the protection layer may be established. In particular, this may be particularly important when larger parts of repair patches are being used in the method prescribed herein.

As an alternative to using heat to fuse the edges of the repair patch with the protection layer a repair solvent can be used. The repair solvent may be applied onto the repair patch of a polymer tape so that the repair patch at least partially dissolves to cover the damaged area of the substrate, thereby forming a protection layer. The repair solution may be applied into the gap between two edges of the protection layer or the gap between the repair patch and a protection layer and the surrounding area for example by means of a small paint brush. The solution will slightly swell the underlying polymer tape and provide a good bond. It will also provide good adhesion to the surface of the substrate. Melting and covering the damaged area may be made sure by visual inspection of the area.

After the repair patch has been dissolved and the protection layer has been established, the solvent needs to be evaporated. Depending on the temperature it might take some hours until the repaired areas will achieve and regain its final mechanical properties. Alternatively, in an additional step a roller, preferably a silicone or rubber roller, is rolled over the molten repair patch so as to flatten the edges and fuse the patch to the composite substrate and/or to the surrounding part of the protection layer. It is also preferred that rolling the roller over the repair patch is done parallel to applying heat to the repair patch. This may be advantageous in that a closer connection between the molten repair patch and the composite substrate and/or the surrounding part of the protection layer may be established. In particular, this may be particularly important when larger parts of repair patches are being used in the method prescribed herein.
Since the method as described herein is able to provide repaired protective coatings exhibiting desirable erosion protection properties, the present disclosure further provides rotor blades of helicopters or wind turbines as well as aircraft wings obtained by the present method.

In particular, since the present method is excellently suited for repairing rain erosion protection layers of rotor blades of wind turbines, a rotor blade of a wind turbine comprising a protection layer obtained by the method described herein is preferred. Preferably, the protection layer is a rain erosion protection layer.

### Examples

The present disclosure is further described without however wanting to limit the disclosure thereto. The following examples are provided to illustrate certain embodiments but are not meant to be limited in any way. Prior to that some test methods used to characterize materials and their properties will be described.

### Abbreviations:

RT: room temperature
h: hour(s)
min: minute(s)
s: seconds
Ex.: Example
TPU : thermoplastic polyurethane

### Materials used:

3M W8750 tape: thermoplastic polyurethane tape having acrylic PSA layer
3M W8750 tape without acrylic PSA layer
3M W9910 primer
10 wt.% solution of Krystalgran (PE102-201) in tetrahydrofurane (THF) Isopropyl Alcohol
Application Solution (mixture of 75 wt.-% demineralized water and 25 wt.-% Isopropyl Alcohol)
Rubber Squeegee (e. g. 3M WETORDRY Rubber Squeegee Part. No. 05517)
Grit 320 sand paper
Heat Gun (Hot Air Blower) with adjustable temperature setting
Small Paint Brush
Box Sealing Tape (e. g. 3M 371)
Rubber Roller (e. g. 3M Safety-Walk Rubber Hand Roller 903)

### Application Procedure

The test blade profiles surfaces having a length of 225 mm simulating the leading edges of wind turbines in the rain erosion text as described herein were ground with grit 320 abrasive paper, cleaned with isopropyl alcohol and allowed to dry under ambient conditions. Two sheets of wind protection tape for each profile were prepared. The size of each sheet was selected in such a way that there was a 5-10 mm excess of the sheet on the long as well on both of the short sides of the profile. Also, there was a gap of 8-12 mm between the two pieces at the front edge of the profile.

For example 1, both sheets were made of 3M Wind Protection Tape W8750. The liner was removed from the first tape sheet and the PSA side of the tape as well as the profile surface were sprayed with the application solution. Next, the tape sheet was affixed with its PSA side onto one side of the profile. The tape was positioned in such a way that there was a 5 - 10 mm excess of the sheet on the long as well on both of the short sides of the profile and a distance of approx. 5 mm to the very outer leading edge of the profile. The outer surface of the tape sheet was then sprayed with application solution. A rubber squeegee was used to carefully squeeze out the application solution without moving or stretching the tape sheet. Accordingly, all air bubbles and water pockets which were visible under the tape sheet were removed. These steps were repeated with the second tape sheet on the other side of the profile. After that, the profile was allowed to dry for at least 1 hour under ambient conditions. Next, excess tape material was sliced off from the long and short edges of the profile. A Heat Gun was used to further carefully dry the gap between the two tape sheets on the profile. After that, W9910 adhesion promoter was applied onto the surface of the profile in the gap between the two tape sheets by means of a small paint brush. Again, a Heat Gun was used to evaporate the adhesion promoter solvent. Prepare an appropriate piece of the repair tape to cover the gap on top of the profile, align it on top of the gap (overlapping the previously applied tape sheets) and fix it on one side by means of a piece of box sealing tape. A Heat Gun with a temperature setting of 270 °C was used to gently heat-up the repair tape starting from the side which was fixed with the box sealing tape. At the same time, the rubber roller was used in order to push the repair tape towards the surface. In order to compensate for thermal expansion, the roller was moved towards the non-fixed end of the tape. Melting of the tape was observed in that the repair tape softened, became glossy and attached to the underlying tape and gap surface. Additional heat and pressure was applied in order to finalize the bonding process and flatten the edges of the repair tape. The test profiles were allowed to cool down under ambient conditions. The box sealing tape and any other excess material was removed. Finally, the profiles were stored for 1 week under ambient conditions to obtain final performance.

For example 2, both sheets were made of 3M Wind Protection Tape W8750. The liner was removed from the first tape sheet and the PSA side of the tape as well as the profile surface were sprayed with the application solution. Next, the tape sheet was affixed with its PSA side onto one side of the profile. The tape was positioned in such a way that there was a 5 - 10 mm excess of the sheet on the long as well on both of the short sides of the profile and a distance of approx. 5 mm to the very outer leading edge of the profile. The outer surface of the tape sheet was then sprayed with application solution. A rubber squeegee was used to carefully squeeze out the application solution without moving or stretching the tape sheet. Accordingly, all air bubbles and water pockets which were visible under the tape sheet were removed. These steps were repeated with the second tape sheet on the other side of the profile. After that, the profile was allowed to dry for at least 1 hour under ambient conditions. Next, excess tape material was sliced off from the long and short edges of the profile. A Heat Gun was used to further carefully dry the gap between the two tape sheets on the profile. After that, W9910 adhesion promoter was applied onto the surface of the profile in the gap between the two tape sheets by means of a small paint brush. Again, a Heat Gun was used to evaporate the adhesion promoter solvent. In the next step the solution of Krystalgran PE102-200 in THF was applied into the gap and the surrounding areas by means of a small paint brush. The solution slightly swelled the underlying tape and provided a good bond. Prepare an appropriate piece of the repair tape to cover the gap on top of the profile, align it on top of the gap (overlapping the previously applied tape sheets) and fix it on one side by means of a piece of box sealing tape. This needs to be done before the Krystalgran solution evaporates. At the same time, the silicone rubber roller was used in order to push the repair tape towards the surface and to remove all air bubbles and flatten the edges of the repair tape. The repair strip as well as the underlying tape contained a relatively large amount of solvent which needed to be evaporated. That took several hours. As soon as the final mechanical properties of the protection layer is achieved the box sealing tape and any other excess material was removed. Finally, the profiles were stored for 1 week under ambient conditions to obtain final performance.

### Test method:

### Rain Erosion Test

The anti-erosion properties were measured with the rain erosion test method according to ASTM G73-10.

The test profiles obtained as described above were mounted on the blades of a rotor, which was rotated to provide a speed ranging from test velocity of 160 m/s at the tip of the blades to a test velocity of 143 m/s in the center and 126 m/s at root.

Rainfall was simulated by spraying water (23 °C), having a droplet size of about 2 mm, with a velocity of 30 mm/hour onto the rotating blades inside the rig. The test was stopped every 30 minutes after which the coated surfaces were visually inspected. The test was run during 18 hours.

### Rain erosion test results

The examples were visually inspected and any damage or erosion to the tape surfaces were determined. For both examples, no visible damage or breakthrough of the repair tapes could be observed. Thus, it can be concluded that the method as described herein is excellently suited for repairing erosion tape surfaces of rotor blades such as rotor blades of wind turbines.

## Claims

1. A method for repairing the surface of rotor blades or aircraft wings, comprising
(a) a composite substrate; and
(b) a protection layer having at least one area of at least partial damage, the method comprising
(i) removing at least part of the damaged part of the protection layer;
(ii) optionally, reconstructing the surface of damaged composite substrate;
(iii) optionally, applying primer solution to the surface of the composite substrate;
(iv) optionally, applying a polymer solution, preferably in at least one organic solvent;
(v) applying a repair patch of a polymer tape comprising at least one thermoplastic elastomer onto at least of a part of the composite surface;
(vi) applying heat so that the repair patch of a polymer tape melts and covers the damaged area, thereby forming a protection layer or applying a repair solution, preferably in at least one organic solvent, so that the repair patch of a polymer tape at least partially dissolves and covers the damaged area.

2. The method according to claim 1, wherein the at least one thermoplastic elastomer in the repair patch is selected from thermoplastic polyurethane, styrenic block copolymers, thermoplastic olefins, elastomeric alloys, thermoplastic copolyesters, thermoplastic polyamides and combinations thereof, and preferably is thermoplastic polyurethane.

3. The method according to claim 1 or claim 2, wherein the protection layer of the rotor blade comprises at least one thermoplastic elastomer.

4. The method according to any one of the preceding claims, wherein the polymer in the polymer solution is the same polymer as in the repair patch of the polymer tape.

5. The method according to any one of the preceding claims, wherein the polymer in the polymer solution, the repair solution, the protection layer and the polymer tape is a thermoplastic elastomer, preferably selected from thermoplastic polyurethane, styrenic block copolymers, thermoplastic olefins, elastomeric alloys, thermoplastic copolyesters, thermoplastic polyamides and combinations thereof, and preferably is thermoplastic polyurethane.

6. The method according to any one of the preceding claims, wherein the repair patch also covers the edges of the protection layer surrounding the damaged area.

7. The method according to any one of the preceding claims, wherein the at least one organic solvent of the polymer solution and/or the repair solution is selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof, preferably tetrahydrofurane, isopropanol, ethanol, and mixtures thereof.

8. The method according to any one of the preceding claims, wherein the heat applied in the first alternative of step (vi) is in the range of from 120 to 500 °C, preferably from 200 to 450 °C, more preferably from 250 to 350 °C.

9. The method according to any one of the preceding claims, wherein the heat in the first alternative of step (vi) is applied until the temperature of the repair patch reaches 140 to 170 °C.

10. The method according to any one of the preceding claims, wherein the protection layer covering the composite substrate comprises a protection tape comprising a polymeric layer and a pressure sensitive adhesive layer.

11. The method according to any one of the preceding claims, wherein the repair patch of a polymeric tape does not comprise a pressure-sensitive adhesive layer.

12. The method according to any one of the preceding claims, wherein step (v) comprises applying at least one patch of a polymer tape comprising a polymeric layer, preferably a polyurethane or thermoplastic polyurethane layer, and a pressure sensitive layer onto at least part of the composite surface and then applying at least one repair patch of a polymer tape comprising at least one thermoplastic elastomer onto at least part of the protection tape and at least part of the adjacent protection layer or applying at least one patch of a protection tape as in alternative one and then applying a repair solution and at least one repair patch of a polymer tape as in alternative one.

13. The method according to any one of the preceding claims, wherein in step (iv) a thermoplastic polyurethane (TPU) solution in tetrahydrofurane is applied.

14. A rotor blade or a wing of an aircraft, comprising a protection layer, obtained by the method according to any one of the preceding claims.

15. The rotor blade or wing of an aircraft according to claim 14, wherein the protection layer is located on the leading edge of the rotor blade, preferably wherein the protection layer is a rain erosion protection layer.

## Patentansprüche

1. Ein Verfahren zum Reparieren der Oberfläche von Rotorblättern oder Flugzeugtragflächen, umfassend
(a) ein Verbundsubstrat; und
(b) eine Schutzschicht mit mindestens einem Bereich mit mindestens teilweiser Beschädigung,
wobei das Verfahren umfasst:
(i) Entfernen mindestens eines Teils des beschädigten Teils der Schutzschicht;
(ii) optional Rekonstruieren der Oberfläche des beschädigten Verbundsubstrats;
(iii) optional, Aufbringen einer Primerlösung auf die Oberfläche des Verbundsubstrats;
(iv) optional, Aufbringen einer Polymerlösung, vorzugsweise in mindestens einem organischen Lösungsmittel;
(v) Aufbringen eines Reparaturpflasters aus einem Polymerband, das mindestens ein thermoplastisches Elastomer umfasst, auf mindestens einen Teil der Verbundoberfläche;
(vi) Aufbringen von Wärme, so dass das Polymerband-Reparaturpflaster schmilzt und den beschädigten Bereich bedeckt, wodurch eine Schutzschicht gebildet wird, oder Aufbringen einer Reparaturlösung, vorzugsweise in mindestens einem organischen Lösungsmittel, so dass sich das Polymerband-Reparaturpflaster mindestens teilweise auflöst und den beschädigten Bereich bedeckt.

2. Das Verfahren nach Anspruch 1, wobei das mindestens eine thermoplastische Elastomer im Reparaturpflaster ausgewählt ist aus thermoplastischem Polyurethan, Styrolblockcopolymeren, thermoplastischen Olefinen, elastomeren Legierungen, thermoplastischen Copolyestern, thermoplastischen Polyamiden und Kombinationen davon, und vorzugsweise ein thermoplastisches Polyurethan ist.

3. Das Verfahren nach Anspruch 1 oder Anspruch 2, wobei die Schutzschicht des Rotorblattes mindestens ein thermoplastisches Elastomer umfasst.

4. Das Verfahren nach einem der vorhergehenden Ansprüche, wobei das Polymer in der Polymerlösung dasselbe Polymer ist wie im Polymerband-Reparaturpflaster.

5. Das Verfahren nach einem der vorstehenden Ansprüche, wobei das Polymer in der Polymerlösung, der Reparaturlösung, der Schutzschicht und dem Polymerband ein thermoplastisches Elastomer ist, vorzugsweise ausgewählt aus thermoplastischem Polyurethan, Styrolblockcopolymeren, thermoplastischen Olefinen, elastomeren Legierungen, thermoplastischen Copolyestern, thermoplastischen Polyamiden und Kombinationen davon, und vorzugsweise ein thermoplastisches Polyurethan ist.

6. Das Verfahren nach einem der vorhergehenden Ansprüche, wobei das Reparaturpflaster auch die den beschädigten Bereich umgebenden Kanten der Schutzschicht bedeckt.

7. Das Verfahren nach einem der vorstehenden Ansprüche, wobei das mindestens eine organische Lösungsmittel der Polymerlösung und/oder der Reparaturlösung ausgewählt ist aus Tetrahydrofuran, Diethylether, Dichlormethan, Trichlormethan, Ethylacetat, Dimethylformamid, Ethanol, Cyclohexan, Butanol, Pentanol, Hexanol, Diethylenglykol, Diethylenglykol-Dimethylether, Methyl-tert-Butylether, Methylenchlorid, Pentan, Hexan, Petrolether, Xylen und Mischungen davon, vorzugsweise Tetrahydrofuran, Isopropanol, Ethanol und Mischungen davon.

8. Das Verfahren nach einem der vorstehenden Ansprüche, wobei die in der ersten Alternative von Schritt (vi) aufgebrachte Wärme im Bereich von 120 bis 500 °C, vorzugsweise von 200 bis 450 °C, mehr bevorzugt von 250 bis 350 °C liegt.

9. Das Verfahren nach einem der vorhergehenden Ansprüche, wobei die Wärme in der ersten Alternative von Schritt (vi) aufgebracht wird, bis die Temperatur des Reparaturpflasters 140 bis 170 °C erreicht.

10. Das Verfahren nach einem der vorhergehenden Ansprüche, wobei die das Verbundsubstrat bedeckende Schutzschicht ein Schutzband umfasst, das eine Polymerschicht und eine Haftkleberschicht umfasst.

11. Das Verfahren nach einem der vorhergehenden Ansprüche, wobei das Polymerband-Reparaturpflaster keine Haftkleberschicht umfasst.

12. Das Verfahren nach einem der vorstehenden Ansprüche, wobei Schritt (v) das Aufbringen von mindestens einem Polymerband-Pflaster, das eine Polymerschicht, vorzugsweise eine Polyurethan- oder thermoplastische Polyurethanschicht, und eine Haftkleberschicht umfasst, auf mindestens einen Teil der Verbundoberfläche und dann das Aufbringen von mindestens einem Polymerband-Reparaturpflaster, das mindestens ein thermoplastisches Elastomer umfasst, auf mindestens einen Teil des Schutzbandes und mindestens einen Teil der angrenzenden Schutzschicht oder das Aufbringen von mindestens einem Schutzband-Pflaster wie in Alternative eins und dann das Aufbringen von einer Reparaturlösung und mindestens einem Polymerband-Reparaturpflaster wie in Alternative eins umfasst.

13. Das Verfahren nach einem der vorhergehenden Ansprüche, wobei in Schritt (iv) eine thermoplastische Polyurethan-(TPU)-Lösung in Tetrahydrofuran aufgebracht wird.

14. Ein Rotorblatt oder eine Tragfläche eines Flugzeugs, umfassend eine Schutzschicht, die nach dem Verfahren nach einem der vorhergehenden Ansprüche erhalten wurde.

15. Das Rotorblatt oder die Tragfläche eines Flugzeugs nach Anspruch 14, wobei sich die Schutzschicht an der Vorderkante des Rotorblattes befindet, vorzugsweise wobei die Schutzschicht eine Regenerosionsschutzschicht ist.

## Revendications

1. Procédé de réparation de la surface de pales de rotor ou d'ailes d'aéronef, comprenant
(a) un substrat composite ; et
(b) une couche de protection ayant au moins une zone d'endommagement au moins partiel,
le procédé comprenant
(i) l'élimination d'au moins une partie de la partie endommagée de la couche de protection ;
(ii) éventuellement, la reconstruction de la surface du substrat composite endommagé ;
(iii) éventuellement, l'application d'une solution d'apprêt à la surface du substrat composite ;
(iv) éventuellement, l'application d'une solution polymère, de préférence dans au moins un solvant organique ;
(v) l'application d'un patch de réparation d'une bande de polymère comprenant au moins un élastomère thermoplastique sur au moins une partie de la surface composite ;
(vi) l'application de chaleur de telle sorte que le patch de réparation d'une bande de polymère fonde et recouvre la zone endommagée, formant de ce fait une couche de protection ou l'application d'une solution de réparation, de préférence dans au moins un solvant organique, de telle sorte que le patch de réparation d'une bande de polymère dissolve et recouvre au moins partiellement la zone endommagée.

2. Procédé selon la revendication 1, dans lequel l'au moins un élastomère thermoplastique dans le patch de réparation est choisi parmi le polyuréthane thermoplastique, des copolymères séquencés styréniques, des oléfines thermoplastiques, des alliages élastomères, des copolyesters thermoplastiques, des polyamides thermoplastiques et des combinaisons de ceux-ci, et est de préférence un polyuréthane thermoplastique.

3. Procédé selon la revendication 1 ou la revendication 2, dans lequel la couche de protection de la pale de rotor comprend au moins un élastomère thermoplastique.

4. Procédé selon l'une quelconque des revendications précédentes, dans lequel le polymère dans la solution de polymère est le même polymère que dans le patch de réparation de la bande de polymère.

5. Procédé selon l'une quelconque des revendications précédentes, dans lequel le polymère dans la solution de polymère, la solution de réparation, la couche de protection et la bande de polymère est un élastomère thermoplastique, de préférence choisi parmi le polyuréthane thermoplastique, des copolymères séquencés styréniques, des oléfines thermoplastiques, des alliages élastomères, des copolyesters thermoplastiques, des polyamides thermoplastiques et des combinaisons de ceux-ci, et est de préférence un polyuréthane thermoplastique.

6. Procédé selon l'une quelconque des revendications précédentes, dans lequel le patch de réparation recouvre également les bords de la couche de protection entourant la zone endommagée.

7. Procédé selon l'une quelconque des revendications précédentes, dans lequel l'au moins un solvant organique de la solution de polymère et/ou la solution de réparation est choisi parmi le tétrahydrofurane, l'éther diéthylique, le dichlorométhane, le trichlorométhane, l'acétate d'éthyle, le diméthylformamide, l'éthanol, le cyclohexane, le butanol, le pentanol, l'hexanol, le diéthylène glycol, le diéthylène glycol diméthyle éther, le méthyl tert-butyl éther, le chlorure de méthylène, le pentane, l'hexane, l'éther de pétrole, le xylène, et des mélanges de ceux-ci, de préférence le tétrahydrofurane, l'isopropanol, l'éthanol, et des mélanges de ceux-ci.

8. Procédé selon l'une quelconque des revendications précédentes, dans lequel la chaleur appliquée dans la première alternative de l'étape (vi) est dans la plage allant de 120 à 500 °C, de préférence de 200 à 450 °C, plus préférablement de 250 à 350 °C.

9. Procédé selon l'une quelconque des revendications précédentes, dans lequel la chaleur dans la première alternative de l'étape (vi) est appliquée jusqu'à ce que la température du patch de réparation atteigne 140 à 170 °C.

10. Procédé selon l'une quelconque des revendications précédentes, dans lequel la couche de protection recouvrant le substrat composite comprend une bande de protection comprenant une couche polymère et une couche d'adhésif sensible à la pression.

11. Procédé selon l'une quelconque des revendications précédentes, dans lequel le patch de réparation d'une bande de polymère ne comprend pas de couche d'adhésif sensible à la pression.

12. Procédé selon l'une quelconque des revendications précédentes, dans lequel l'étape (v) comprend l'application d'au moins un patch d'une bande de polymère comprenant une couche de polymère, de préférence une couche de polyuréthane ou de polyuréthane thermoplastique, et une couche sensible à la pression sur au moins une partie de la surface composite puis l'application d'au moins un patch de réparation d'une bande de polymère comprenant au moins un élastomère thermoplastique sur au moins une partie de la bande de protection et au moins une partie de la couche de protection adjacente ou l'application d'au moins un patch d'une bande de protection comme dans la première alternative puis l'application d'une solution de réparation et d'au moins un patch de réparation d'une bande de polymère comme dans la première alternative.

13. Procédé selon l'une quelconque des revendications précédentes, dans lequel à l'étape (iv) une solution de polyuréthane thermoplastique (TPU) dans du tétrahydrofurane est appliquée.

14. Pale de rotor ou aile d'aéronef, comprenant une couche de protection, obtenue par le procédé selon l'une quelconque des revendications précédentes.

15. Pale de rotor ou aile d'aéronef selon la revendication 14, dans laquelle la couche de protection est située sur le bord d'attaque de la pale de rotor, de préférence dans laquelle la couche de protection est une couche de protection contre l'érosion de la pluie.
